(19) Europäisches Patentamt / European Patent Office / Office européen des brevets

(11) **EP 2 713 491 A1**

(12) **DEMANDE DE BREVET EUROPEEN**

(43) Date de publication:
**02.04.2014 Bulletin 2014/14**

(51) Int Cl.:
**H02M 1/44** (2007.01)    **H02M 3/335** (2006.01)

(21) Numéro de dépôt: **13186456.3**

(22) Date de dépôt: **27.09.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.09.2012 FR 1259181**

(71) Demandeur: **Sagemcom Energy & Telecom SAS**
**92500 Rueil-Malmaison (FR)**

(72) Inventeur: **Dutheil, Michel**
**92500 Rueil Malmaison (FR)**

(74) Mandataire: **Lavialle, Bruno François Stéphane et al**
**Cabinet Boettcher**
**16, rue Médéric**
**75017 Paris (FR)**

(54) **Convertisseur à découpage à pertes de commutation réduites**

(57) Convertisseur à découpage, comportant une ligne primaire et une ligne secondaire sur lesquelles sont montés respectivement un enroulement primaire et un enroulement secondaire d'un transformateur, la ligne primaire ayant une première extrémité pourvue des moyens de sa liaison à une source de tension et une deuxième extrémité, un commutateur de découpage étant monté sur la ligne primaire entre l'enroulement primaire et la deuxième extrémité de la ligne primaire, la ligne secondaire ayant des extrémités pourvues de moyens de raccordement de la ligne secondaire à un circuit destiné à être alimenté via le convertisseur, caractérisé en ce que la ligne primaire comprend une diode, en série avec l'enroulement primaire, entre la première extrémité et l'enroulement primaire avec son anode du côté de la première extrémité et sa cathode du côté de l'enroulement primaire, et caractérisé en ce qu'une résistance d'amortissement est montée en parallèle de la diode.

**Fig. 2**

EP 2 713 491 A1

# Description

La présente invention concerne un convertisseur à découpage par exemple de type FLYBACK.

Un convertisseur à découpage comprend généralement une ligne primaire et une ligne secondaire sur lesquelles sont montés respectivement un enroulement primaire et un enroulement secondaire d'un transformateur. La ligne primaire a, de part et d'autre de l'enroulement primaire, une première extrémité pourvue des moyens de sa liaison à une source de tension, par exemple le réseau de distribution redressé, et une deuxième extrémité pourvue des moyens de sa liaison à une voie de retour (masse). Un transistor de découpage est monté sur la ligne primaire entre l'enroulement primaire et la deuxième extrémité de la ligne primaire. La ligne secondaire a des extrémités pourvues de moyens de raccordement de la ligne secondaire à un circuit destiné à être alimenté via le convertisseur. Le circuit est par exemple un compteur électrique ou tout autre circuit tel qu'un élévateur de tension. Une diode de redressement est montée sur la ligne secondaire et un condensateur est monté sur la ligne secondaire pour filtrer la tension redressée.

Lorsque le transistor de découpage est dans son état passant, le flux magnétique augmente dans le transformateur. La tension dans la ligne secondaire étant négative, la diode est bloquée et le condensateur alimente le circuit.

Lorsque le transistor de découpage est dans son état bloqué, la diode devient passante de sorte que le condensateur et le circuit sont alimentés par l'énergie stockée dans le transformateur.

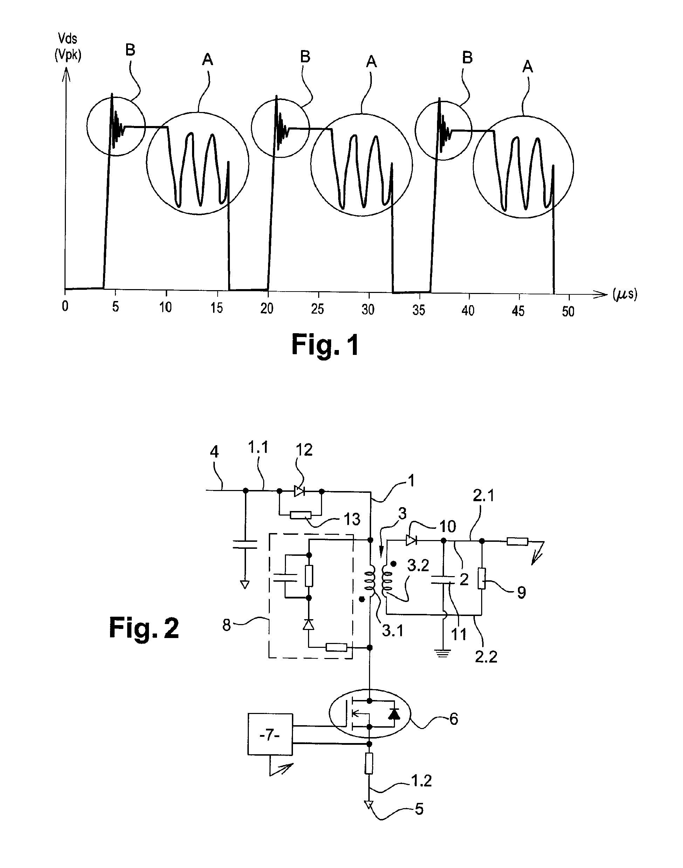

Le blocage du transistor engendre une surtension dans la ligne primaire. Cette surtension se compose de la tension d'alimentation, la tension réfléchie et la tension due à l'inductance de fuite. La figure 1 est une courbe représentant, en fonction du temps, la tension en entrée du commutateur de découpage d'un convertisseur de type FLYBACK classique.

La tension réfléchie se révèle particulièrement gênante. Elle est le reflet de la tension secondaire et est produite par une résonance entre les capacités parasites et l'inductance de l'enroulement primaire. Les capacités parasites sont notamment celle du transformateur entre les enroulements primaire et secondaire, celle du transistor à l'état bloqué, celle existant au sein du câblage. Il en résulte une tension de grande amplitude mais de fréquence assez basse pouvant engendrer des problèmes de compatibilité électromagnétique. Cette tension est visible dans la zone A de la courbe de tension de la figure 1.

La tension due à l'inductance de fuite a une fréquence relativement élevée susceptible elle aussi d'engendrer des problèmes de compatibilité électromagnétique mais son amplitude est plus faible. Cette tension est visible dans la zone B de la courbe de tension de la figure 1.

Un but de l'invention est d'améliorer au moins en partie les performances de tels convertisseurs.

A cet effet, on prévoit, selon l'invention, un convertisseur à découpage, comportant une ligne primaire et une ligne secondaire sur lesquelles sont montés respectivement un enroulement primaire et un enroulement secondaire d'un transformateur, la ligne primaire ayant une première extrémité pourvue des moyens de sa liaison à une source de tension et une deuxième extrémité, un commutateur de découpage étant monté sur la ligne primaire entre l'enroulement primaire et la deuxième extrémité de la ligne primaire, la ligne secondaire ayant des extrémités pourvues de moyens de raccordement de la ligne secondaire à un circuit destiné à être alimenté via le convertisseur, **caractérisé en ce que** la ligne primaire comprend une diode, en série avec l'enroulement primaire, entre la première extrémité et l'enroulement primaire avec son anode du côté de la première extrémité et sa cathode du côté de l'enroulement primaire, et **caractérisé en ce qu'**une résistance d'amortissement est montée en parallèle de la diode.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est une courbe représentant, en fonction du temps, la tension en entrée du transistor de découpage d'un convertisseur de type FLYBACK classique ;
- la figure 2 est une vue schématique d'un convertisseur selon l'invention,
- la figure 3 est une courbe représentant la tension en entrée du transistor de découpage de ce convertisseur.

En référence à la figure 2, le convertisseur à découpage selon le premier mode de réalisation, ici de type FLYBACK, comprend une ligne primaire 1 et une ligne secondaire 2 sur lesquelles sont montés respectivement un enroulement primaire 3.1 et un enroulement secondaire 3.2 d'un transformateur 3. L'enroulement primaire 3.1 et l'enroulement secondaire 3.2 ont des sens d'enroulement opposés.

La ligne primaire 1 a, de part et d'autre de l'enroulement primaire, une première extrémité 1.1 pourvue des moyens de sa liaison à une source de tension continue, ici le réseau de distribution symbolisé en 4, et une deuxième extrémité 1.2 pourvue des moyens de sa liaison à une voie de retour 5 (masse).

Un transistor de découpage 6, ici à effet de champ, est monté sur la ligne primaire 1 entre l'enroulement primaire 3.1 et la deuxième extrémité 1.2 de la ligne primaire 1. Plus précisément, le transistor de découpage 6 a son drain relié à l'enroulement primaire 3.1 et sa source reliée à la deuxième extrémité 1.2 de la ligne primaire 1 via une résistance. La grille du transistor de découpage 6 est relié à un circuit de commande 7 de type PWM (« pulse width modulator », modulateur de largeur d'impulsion) connu en lui-même.

Un circuit d'amortissement généralement désigné en 8 et connu en lui-même est raccordé à la ligne primaire 1 de part et d'autre de l'enroulement primaire 3.1. Le circuit d'amortissement 8 comprend une ligne qui comprend successivement une première résistance, une diode et une seconde résistance et qui est reliée aux bornes de l'enroulement primaire 3.1. Un condensateur est monté en parallèle de la seconde résistance. Le circuit d'amortissement permet d'amortir et d'écrêter une partie des oscillations de tension engendrées lors du fonctionnement du convertisseur.

La ligne secondaire 2 a des extrémités 2.1, 2.2 pourvues de moyens de raccordement de la ligne secondaire 2 à un circuit, ici symbolisé par une résistance 9, destiné à être alimenté via le convertisseur. Le circuit est par exemple un compteur électrique ou tout autre circuit tel qu'un élévateur de tension. Une diode de redressement 10 est montée sur la ligne secondaire 2 en série avec l'enroulement secondaire 3.2 et un condensateur 11 est monté sur la ligne secondaire 2 pour filtrer la tension redressée.

Selon le premier mode de réalisation de l'invention, une diode 12 est montée sur la ligne primaire 1, en série avec l'enroulement primaire 3.1, entre la première extrémité 1.1 de la ligne primaire et l'enroulement primaire 3.1. La diode 12 a son anode reliée à la première extrémité 1.1 de la ligne primaire 1 et sa cathode reliée à l'enroulement primaire 3.1 pour être passante de la première extrémité 1.1 vers le transistor de découpage 6. La diode 12 présente une vitesse de commutation élevée en regard de la fréquence de découpage et des performances attendues lors des transitions.

Une résistance d'amortissement 13 est montée en parallèle de la diode 12. La résistance d'amortissement a une valeur Ram telle que $2\sqrt{\dfrac{L}{C}}$ où L est l'inductance de l'enroulement primaire et C est la somme des capacités parasites.

Lorsque le transistor de découpage 6 est dans son état passant, le flux magnétique augmente dans le transformateur 3. La tension dans la ligne secondaire étant négative, la diode de redressement 10 est bloquée et le condensateur 11 alimente le circuit 9.

Lorsque le transistor de découpage 6 est dans son état bloqué, la diode de redressement 10 devient passante de sorte que le condensateur 11 et le circuit 9 sont alimentés par l'énergie stockée dans le transformateur 3.

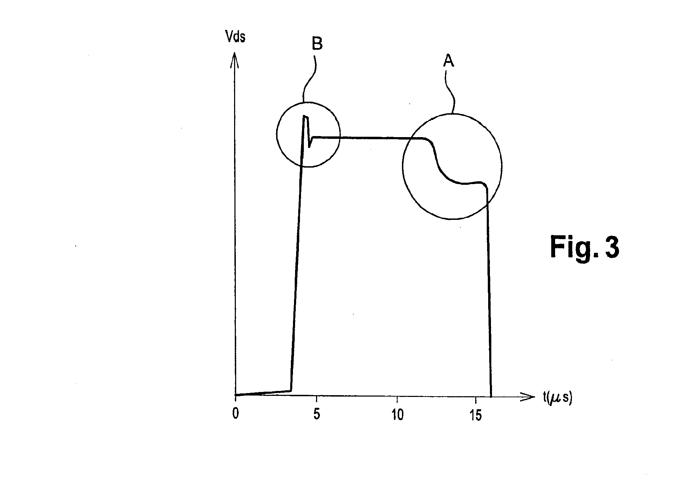

Le blocage du transistor de découpage 6 engendre une surtension dans la ligne primaire 1 comme visible sur la figure 3. La tension oscillante due à l'inductance de fuite (zone B de la courbe) demeure sensiblement identique à celle de l'art antérieur (zone B de la courbe de la figure 1). En revanche, la tension réfléchie (zone A de la courbe de la figure 3) décroît rapidement et sans oscillation. Ceci est dû au fait que, lors du blocage du transistor de découpage 6, la diode 12 se bloque découplant l'enroulement primaire 3.1 de la première extrémité 1.1 et donc du réseau 4 et la résistance 13 amortit les oscillations de tension. La diode 12 a un effet dans la plage de fréquences comprises entre quelques centaines de kHz et 1 MHz environ et la résistance 13 a un effet dans la plage des fréquences comprises entre 7 MHz et 30 MHz environ. L'impact de cette tension sur les performances en termes de compatibilité électromagnétiques (EN55022) est donc faible. Il en résulte également une diminution de la pointe de courant survenant habituellement au déblocage du transistor de découpage.

La déconnexion réalisée par la diode 12 permet au moment de la surtension de délier le transformateur 3 de la ligne d'alimentation 4. On a un découpage du transformateur pendant cette phase de temps, à chaque période de découpage.

Du coup la transmission de « signaux perturbateurs » en émission conduite sur la ligne 4 s'en trouve allégée et ceci permet de tenir plus facilement le gabarit d'un test d'émission conduite.

De plus la résistance d'amortisseur 13 peut permettre d'atteindre l'amortissement critique du réseau formé par l'inductance de l'enroulement primaire 3.1 et la capacité parasite du transistor commutateur 6 - augmentée des capacités parasites du transformateur.

A titre d'exemple numérique pour un convertisseur fournissant en sortie 5W sous une tension de 3,3 V à partir d'une tension redressée de 230 Veff :

- l'inductance primaire du transformateur est de 3mH,
- la fréquence de découpage est de 62 kHz,
- la diode 12 a un temps de recouvrement inverse (ou trr) inférieur à 50 ns pour une fréquence de commutation de 62 kHz (la diode 12 est par exemple du type STTH110),
- la résistance 13 a une valeur comprise entre 5kΩ et 10kΩ.

Bien entendu, l'invention n'est pas limitée aux modes de réalisation décrits mais englobe toute variante entrant dans le champ de l'invention telle que définie par les revendications.

En particulier, bien que l'invention ait été décrite en application à un convertisseur de type FLYBACK, l'invention est applicable à d'autres types de convertisseur et notamment des convertisseurs de types symétrique ou FORWARD.

Tout commutateur de découpage peut être utilisé.

**Revendications**

1. Convertisseur à découpage, comportant une ligne primaire et une ligne secondaire sur lesquelles sont montés respectivement un enroulement primaire et un enroulement secondaire d'un transformateur, la ligne primaire ayant une première extrémité pourvue des moyens de sa liaison à une source de tension et une deuxième extrémité, un commutateur de découpage étant monté sur la ligne primaire entre l'enroulement primaire et la deuxième extrémité de la ligne primaire, la ligne secondaire ayant des extrémités pourvues de moyens de raccordement de la ligne secondaire à un circuit destiné à être alimenté via le convertisseur, **caractérisé en ce que** la ligne primaire comprend une diode, en série avec l'enroulement primaire, entre la première extrémité et l'enroulement primaire avec son anode du côté de la première extrémité et sa cathode du côté de l'enroulement primaire, et **caractérisé en ce qu'**une résistance d'amortissement est montée en parallèle de la diode.

2. Convertisseur selon la revendication 1, comprenant un circuit d'amortissement raccordé à la ligne primaire de part et d'autre de l'enroulement primaire.

**Fig. 1**

**Fig. 2**

Fig. 3

**Europäisches Patentamt**
**European Patent Office**
**Office européen des brevets**

# RAPPORT DE RECHERCHE EUROPEENNE

Numéro de la demande

EP 13 18 6456

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/169020 A1 (KNILL ALEX C [GB]) 4 août 2005 (2005-08-04) * figure 3 * * alinéa [0039] * | 1,2 | INV. H02M1/44 H02M3/335 |
| A | EP 1 501 179 A1 (FRIWOMOBILEPOWER GMBH [DE] FRIWO MOBILE POWER GMBH [DE]) 26 janvier 2005 (2005-01-26) * figure 5 * | 1,2 | |
| A | US 2011/228569 A1 (IWATT INC [US]; ZHENG JUN [CN]; QUEK ENG HWEE [SG]; GUO HUAMING [CN]) 22 septembre 2011 (2011-09-22) * figures 2A,2B * * alinéa [0040] * | 1,2 | |
| A | US 2003/156434 A1 (NAKANISHI TSUTOMU [JP] ET AL) 21 août 2003 (2003-08-21) * figures 1,2 * | 1,2 | |
| A | US 6 490 177 B1 (FIGUEROA SALVADOR [US]) 3 décembre 2002 (2002-12-03) * figures 2,3 * | 1,2 | DOMAINES TECHNIQUES RECHERCHES (IPC) H02M |
| A | MOHAMMAD ROUHOLLAH YAZDANI ET AL: "EMI Analysis and Evaluation of an Improved ZCT Flyback Converter", IEEE TRANSACTIONS ON POWER ELECTRONICS, IEEE SERVICE CENTER, PISCATAWAY, NJ, US, vol. 26, no. 8, 1 août 2011 (2011-08-01), pages 2326-2334, XP011382816, ISSN: 0885-8993, DOI: 10.1109/TPEL.2010.2095884 * figure 1 * | 1,2 | |

-/--

Le présent rapport a été établi pour toutes les revendications

| Lieu de la recherche | Date d'achèvement de la recherche | Examinateur |
|---|---|---|
| La Haye | 31 janvier 2014 | Gotzig, Bernhard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 13 18 6456

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Gwan-Bon Koo: "Application Note AN-4147 Design Guidelines for RCD Snubber of Flyback Converters", , 31 décembre 2006 (2006-12-31), XP055062899, Extrait de l'Internet: URL:http://www.fairchildsemi.com/an/AN-4147.pdf [extrait le 2013-05-14] * le document en entier * ----- | 1,2 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 31 janvier 2014 | Gotzig, Bernhard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 18 6456

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2014

| Document brevet cité au rapport de recherche | Date de publication | Membre(s) de la famille de brevet(s) | Date de publication |
|---|---|---|---|
| US 2005169020 A1 | 04-08-2005 | CA 2557328 A1 | 18-08-2005 |
| | | US 2005169020 A1 | 04-08-2005 |
| | | WO 2005076451 A1 | 18-08-2005 |
| EP 1501179 A1 | 26-01-2005 | AT 302500 T | 15-09-2005 |
| | | AT 408926 T | 15-10-2008 |
| | | BR PI0405638 A | 28-06-2005 |
| | | CN 1836365 A | 20-09-2006 |
| | | DE 50301019 D1 | 22-09-2005 |
| | | DK 1499005 T3 | 24-10-2005 |
| | | EP 1499005 A1 | 19-01-2005 |
| | | EP 1501179 A1 | 26-01-2005 |
| | | ES 2249662 T3 | 01-04-2006 |
| | | ES 2314311 T3 | 16-03-2009 |
| | | JP 4260840 B2 | 30-04-2009 |
| | | JP 2007507197 A | 22-03-2007 |
| | | US 2006133117 A1 | 22-06-2006 |
| | | WO 2005008872 A1 | 27-01-2005 |
| US 2011228569 A1 | 22-09-2011 | CN 102239628 A | 09-11-2011 |
| | | US 2011228569 A1 | 22-09-2011 |
| | | WO 2010063139 A1 | 10-06-2010 |
| US 2003156434 A1 | 21-08-2003 | CN 1457545 A | 19-11-2003 |
| | | JP 2002272101 A | 20-09-2002 |
| | | US 2003156434 A1 | 21-08-2003 |
| | | WO 02071590 A1 | 12-09-2002 |
| US 6490177 B1 | 03-12-2002 | AUCUN | |

EPO FORM P0460

Pour tout renseignement concernant cette annexe : voir Journal Officiel de l'Office européen des brevets, No.12/82